# EUROPÄISCHE PATENTANMELDUNG

(11) **EP 1 657 420 A1**
(43) Veröffentlichungstag der Anmeldung: **17.05.2006**
(21) Anmeldenummer: 04105811.6
(22) Anmeldetag: 16.11.2004
(51) Int. Cl.: F02D 41/04, F01L 13/08, F02N 17/00

(54) **Brennkraftmaschine und Verfahren zum kontrollierten Abstellen einer Brennkraftmaschine**

(71) Anmelder: Ford Global Technologies, LLC, A subsidary of Ford Motor Company, Dearborn, MI 48126 (US)
(72) Erfinder: Grieser, Klemens, 40764 Langenfeld (DE); Kramer, Ulrich, 51427 Bergisch Gladbach (DE); Phlips, Patrick Joseph, 50858 Koeln (DE); Steiner, Bernd, 51467 Bergisch-Gladbach (DE)
(74) Vertreter: Drömer, Hans-Carsten

(57) **Zusammenfassung**

Die Erfindung betrifft eine Brennkraftmaschine umfassend n Zylinder (1), die jeweils über Steuerorgane (5,7,9) für einen Ladungswechsel verfügen.

Des Weiteren betrifft die Erfindung ein Verfahren zum kontrollierten Abstellen einer derartigen Brennkraftmaschine.

Es soll eine Brennkraftmaschine der oben genannten Art bereitgestellt werden, mit der gezielt - nach dem Abstellen der Brennkraftmaschine - eine für den Neustart der Brennkraftmaschine vorteilhafte, vorgebbare Endstellung der Kurbelwelle angefahren werden kann.

Erreicht wird dies durch eine Brennkraftmaschine der oben genannten Art, die dadurch gekennzeichnet ist, daß mindestens ein zusätzliches Steuerorgan (10) in mindestens einem der n Zylinder (1) vorgesehen ist, mit dem ein Gasaustausch zwischen dem mindestens einen Zylinder (1) und seiner Umgebung realisierbar ist.

Das Verfahren ist dadurch gekennzeichnet, daß durch Öffnen und Schließen dieses mindestens einen zusätzlichen Steuerorgans (10) der Druck in dem mindestens einen Zylinder (1) infolge eines Gasaustausches zwischen Zylinder (1) und Umgebung beeinflußt wird, so daß ein von den in den n Zylindern (1) befindlichen Gasen auf die Kurbelwelle übertragenes Drehmoment beeinflußt wird.

## Beschreibung

Die Erfindung betrifft eine Brennkraftmaschine umfassend n Zylinder, die jeweils über Steuerorgane für einen Ladungswechsel verfügen.

Des Weiteren betrifft die Erfindung ein Verfahren zum kontrollierten Abstellen einer derartigen Brennkraftmaschine.

Aufgrund der begrenzten Ressourcen an fossilen Energieträgern, insbesondere aufgrund der begrenzten Vorkommen an Mineralöl als Rohstoff für die Gewinnung von Brennstoffen für den Betrieb von Verbrennungskraftmaschinen, ist man bei der Entwicklung von Verbrennungsmotoren ständig bemüht, den Kraftstoffverbrauch zu minimieren. Dabei steht einerseits die verbesserte d. h. effektivere Verbrennung im Vordergrund der Bemühungen. Andererseits können aber auch bestimmte Strategien im Hinblick auf den grundsätzlichen Betrieb der Brennkraftmaschine zielführend sein.

Ein Konzept zur Verbesserung des Kraftstoffverbrauchs eines Fahrzeuges besteht beispielsweise darin, die Brennkraftmaschine - statt sie im Leelauf weiter zu betreiben - abzuschalten, wenn kein momentaner Leistungsbedarf besteht. In der Praxis bedeutet dies, daß zumindest bei Fahrzeugstillstand die Brennkraftmaschine ausgeschaltet wird. Ein Anwendungsfall ist der Stop-and-Go-Verkehr, wie er sich beispielsweise im Stau auf Autobahnen und Landstraßen einstellt. Im innerstädtischen Verkehr ist der Stop-and-Go-Verkehr infolge der vorhandenen und nicht aufeinander abgestimmten Ampelanlagen nicht mehr die Ausnahme, sondern sogar die Regel. Weitere Anwendungsfälle bieten beschrankte Bahnübergänge und dergleichen.

Problematisch bei den Konzepten, welche zur Verbesserung des Kraftstoffverbrauchs die Brennkraftmaschine bei fehlendem Bedarf abschalten, ist die Notwendigkeit die Brennkraftmaschine wieder zu starten. Probleme bereitet das Neustarten, weil bei unkontrolliertem Abstellen der Brennkraftmaschine, die Kurbel- und die Nockenwelle in einer beliebigen und zudem nicht bekannten Stellung zum Stehen kommen. Folglich ist die Position der Kolben in den einzelnen Zylindern der Brennkraftmaschine ebenfalls nicht bekannt und dem Zufall überlassen. Diese Informationen sind aber für einen unkomplizierten und möglichst schnellen und damit kraftstoffsparenden Neustart unerläßlich.

Bei einer Brennkraftmaschine, die mit einer elektronisch geregelten Zündung und/oder einer elektronisch geregelten Einspritzung ausgestattet ist, liefern an der Kurbelwelle angeordnete Marker Signale über die Kurbelwinkelstellung an mit der Motorsteuerung verbundene Sensoren zur Steuerung des Zünd- und des Einspritzzeitpunktes. Zur Generierung dieser Signale ist es aber zunächst erforderlich, die Kurbelwelle in Drehung zu versetzen. Direkt zu Beginn des Neustarts und des Starts im allgemeinen besteht Unklarheit über den richtigen Einspritz- und Zündzeitpunkt, so daß eine Einlaufphase zur Synchronisation der Kurbelwinkelstellung einerseits und der Motorbetriebsparameter andererseits erforderlich wird. Zudem müssen Geräte zum Starten bzw. Neustarten der Brennkraftmaschine vorgesehen werden, beispielsweise ein konventioneller Anlasser oder ein ähnliches Gerät, das geeignet ist, die Kurbelwelle zwangsweise in Drehung zu versetzen, wie beispielsweise ein Elektromotor.

Um den Neustart zu vereinfachen, werden nach dem Stand der Technik verschiedene Konzepte vorgeschlagen.

Die deutsche Offenlegungsschrift DE 42 30 616 schlägt beispielsweise vor, die Winkellage der Kurbelwelle, welche beim Abschalten registriert wird, zu speichern und für den Neustart zu verwenden, so daß die geeigneten Zündzeitpunkte und Einspritzzeitpunkte unmittelbar zur Verfügung stehen. Diese Vorgehensweise hat sich aber in der Praxis nicht bewährt, da die gespeicherten Informationen über die Stellung der Kurbelwelle zu ungenau sind.

Andere Lösungsansätze präferieren - wie die vorliegende Erfindung auch - Verfahren zum kontrollierten Abstellen der Brennkraftmaschine. Das kontrollierte Abstellen besteht dabei darin, ganz bestimmte Kurbelwinkelpositionen - sogenannte Vorzugspositionen - bewußt beim Abschalten der Brennkraftmaschine anzufahren. Die Endstellung der Kurbelwelle wird dabei nicht mehr dem Zufall überlassen und mehr oder weniger genau registriert, sondern es werden gezielt für den Neustart vorteilhafte Kurbelwinkelstellungen herbeigeführt.

Bei Brennkraftmaschinen mit Direkteinspritzung ist es bei geeigneter Kurbelwinkelstellung sogar ohne Starter möglich, aus dem Stillstand direkt zu starten bzw. neu zu starten. Dabei wird Kraftstoff direkt in die Brennräume der stillstehenden Brennkraftmaschine eingespritzt und mittels einer Zündkerze gezündet, so daß die Explosion des Luft-Kraftstoffgemisches die Kolben in Bewegung bringt, wodurch die Kurbelwelle in Drehung versetzt wird.

Diese Art des Startens bzw. Neustartens erfordert aber die Einhaltung bestimmter Randbedingungen. Insbesondere muß die Kurbelwelle - wie bereits erwähnt - in einer bestimmten Position bzw. in einem bestimmten Kurbelwinkelbereich stehen. Insofern sind gerade bei Brennkraftmaschinen mit Direkteinspritzung Verfahren zum kontrollierten Abstellen zielführend.

Ein Verfahren zum kontrollierten Abstellen einer Brennkraftmaschine wird beispielsweise in der WO 01/48373 offenbart. Die WO 01/48373 lehrt die Anwendung eines Verfahrens, bei dem nach dem Abschalten d.h. nach Beendigung des regulären Betriebes der Brennkraftmaschine eine Verstellvorrichtung aktiviert und angesteuert wird, mit der die Kurbelwelle und/oder die Nockenwelle in eine vorgebbare vorteilhafte Winkelstellung bewegt wird. Dabei können sowohl aktive wie passive Verstellvorrichtungen zum Einsatz kommen.

Als aktive Verstellvorrichtung kann ein Elektromotor dienen, der ein Drehmoment auf die Kurbelwelle überträgt und diese nach dem Abschalten der Brennkraftmaschine in die gewünschte Position dreht, welche dann bis zum Neustarten der Brennkraftmaschine beibehalten wird. In der WO 01/48373 werden auch aktive Verstellvorrichtungen beschrieben, welche Mittel zur Aktivierung der Einspritzung und Zündung der Brennkraftmaschine nach Beendigung ihres regulären Betriebes aufweisen. Diese Mittel werden eingesetzt, um gezielt Verbrennungsvorgänge in den Zylindern zu initiieren, mit denen ein bestimmtes Drehmoment auf die Kurbelwelle übertragen wird, so daß eine vorgebbare vorteilhafte Kurbelwinkelstellung angefahren werden kann.

Passive Verstellvorrichtungen können aber gemäß der WO 01/48373 ebenfalls eingesetzt werden, wobei diese passiven Verstellvorrichtungen nach Beendigung des regulären Betriebs der Brennkraftmaschine die im Nachlauf der Kurbelwelle noch vorhandene Drehbewegung ausnutzen und in der Art beeinflussen, daß die Kurbelwelle in der vorgegebenen vorteilhaften Kurbelwellenstellung zum Stillstand kommt. Als passive Verstellvorrichtung werden Mittel vorgeschlagen, die beispielsweise eine Gaswechselventilsteuerung umfassen, welche bei geeigneter Ansteuerung ein Bremsmoment auf die Brennkraftmaschine bzw. Kurbelwelle überträgt, so daß die Verzögerung der Welle und damit ihre Endstellung steuerbar wird.

Die in der WO 01/48373 aufgezeigten Verstellvorrichtungen weisen verschiedene Nachteile auf. Die aktiven Verstellvorrichtungen machen entweder zusätzliche Bauteile - wie unter Umständen noch nicht vorhandene Elektromotoren - zur Aufbringung eines Verstelldrehmomentes erforderlich, oder sie arbeiten wie bei der Initiierung gezielter Verbrennungsvorgänge zum Anfahren der vorgegebenen Kurbelwinkelstellung mittels einer zusätzlichen Kraftstoffeinspritzung und -zündung. Gerade das letztgenannte Verfahren, welches die Verwendung von Kraftstoff erfordert, steht in krassem Gegensatz zu dem grundsätzlichen Ziel der Abschaltung der Brennkraftmaschine, nämlich durch das Abstellen der Brennkraftmaschine Kraftstoff zu sparen und damit den Kraftstoffverbrauch eines Fahrzeuges zu optimieren.

Ein Verfahren zur Auslaufsteuerung einer Brennkraftmaschine, bei dem gezielt die Gasaustauschventile der Brennkraftmaschine zur Ansteuerung der Vorzugspositionen verwendet werden, ist in der WO 01/44636 A2 beschrieben. Durch geeignete Ansteuerung d.h. durch geeignetes Öffnen und Schließen der Gasaustauschventile wird dabei Einfluß genommen auf den Brennraumdruck und damit auf das von den Gaskräften über den Kolben und die Pleuelstange auf die Kurbelwelle ausgeübte Drehmoment. Dieses Verfahren setzt aber eine Brennkraftmaschine voraus, die über eine zumindest teilweise variable Ventilsteuerung verfügt. Zudem ist eine komplexe und daher aufwendige Steuerung erforderlich.

Vor diesem Hintergrund ist es die Aufgabe der vorliegenden Erfindung, eine Brennkraftmaschine der gattungsbildenden Art bereitzustellen, mit der gezielt - nach dem Abstellen der Brennkraftmaschine - eine für den Neustart der Brennkraftmaschine vorteilhafte, vorgebbare Endstellung der Kurbelwelle angefahren werden kann und mit der die nach dem Stand der Technik bekannten Nachteile überwunden werden.

Eine weitere Teilaufgabe der vorliegenden Erfindung ist es, ein Verfahren zum kontrollierten Abstellen einer derartigen Brennkraftmaschine aufzuzeigen.

Gelöst wird die erste Teilaufgabe durch eine Brennkraftmaschine umfassend n Zylinder, die jeweils über Steuerorgane für einen Ladungswechsel verfügen, und die dadurch gekennzeichnet ist, daß mindestens ein zusätzliches Steuerorgan in mindestens einem der n Zylinder vorgesehen ist, mit dem ein Gasaustausch zwischen dem mindestens einen Zylinder und seiner Umgebung realisierbar ist.

Bei der erfindungsgemäßen Brennkraftmaschine wird das von den Gaskräften über den Kolben und die Pleuelstange auf die Kurbelwelle ausgeübte Drehmoment genutzt, um nach Abschalten der Brennkraftmaschine die gewünschte Endstellung der Kurbelwelle anzufahren.

Hierzu wird das von den Gaskräften auf die Kurbelwelle ausgeübte Drehmoment in der Art beeinflußt, daß die nach Abschalten der Zündung und/oder der Kraftstoffzufuhr von der Brennkraftmaschine bis zu ihrem Stillstand abgegebene Energie mittels des steuerbaren Drehmoments kontrolliert in der Weise verbraucht wird, daß die Kurbelwelle in einer vorbestimmbaren Position angehalten wird.

Zur Beeinflussung des auf die Kurbelwelle übertragenen Drehmomentes wird ein zusätzliches Steuerorgan vorgesehen, wobei durch Öffnen dieses zusätzlichen Steuerorgans ein Gasaustausch in der Art erfolgen kann, daß entsprechend dem momentan vorliegenden Druckgefälle Gas aus dem Zylinder austreten bzw. in den Zylinder einströmen kann. Dadurch wird Einfluß genommen auf das im Zylinder vorliegende Druckniveau und somit auf das von den Gasen auf die Kurbelwelle ausgeübte Drehmoment.

Als Umgebung des Zylinders sind dabei im Rahmen der vorliegenden Erfindung sämtliche an den Zylinder angrenzende Systeme anzusehen. Dabei wird der Zylinder bzw. Brennraum seitlich durch ein Zylinderrohr und nach unten durch den Kolben, der axial beweglich in dem Zylinderrohr geführt wird, begrenzt. Der Kolben dichtet zusammen mit den Kolbenringen den Brennraum gegen das Kurbelgehäuse ab. Nach oben wird der Brennraum durch den Zylinderkopf und die in dem Zylinderkopf angeordneten Steuerorgane, die üblicherweise als Hubventile ausgebildet sind, begrenzt. Das mittels des zusätzlichen Steuerorgans entnommene Gas kann beispielsweise dem Kurbelgehäuse zugeführt werden oder aber über den Zylinderkopf aus dem Zylinder entnommen werden.

Um einen Gasaustausch realisieren zu können, muß das zusätzliche Steuerorgan die Begrenzung des Zylinders durchstoßen, so daß durch Öffnen des zusätzlichen Steuerorgans Gas aus dem Zylinder ausströmen oder in den Zylinder einströmen kann.

Durch Verwendung eines zusätzlichen Steuerorgans ist es nicht erforderlich, zusätzliche Verstellvorrichtungen, insbesondere aktive Verstellvorrichtung wie einen Elektromotor, vorzusehen, um nach dem Abschalten der Brennkraftmaschine die Kurbelwelle in die gewünschte Position zu drehen, so wie dies in der WO 01/48373 vorschlagen wird.

In diesem Zusammenhang kann das zusätzliche Steuerorgan als passive Verstellvorrichtung angesehen werden, mit welcher das auf die Kurbelwelle ausgeübte Drehmoment bis zum Stillstand der Kurbelwelle gezielt beeinflußt wird. Im Vergleich zu einer aktiven Verstellvorrichtung bietet eine passive Verstellvorrichtung den Vorteil, daß ihr Energieverbrauch niedriger ist, da sie eine Drehbewegung der Kurbelwelle nicht initiiert, sondern lediglich eine vorhandene Drehbewegung der Kurbelwelle in geeigneter Weise verzögert.

Durch die Verwendung eines zusätzlichen Steuerorgans zum kontrollierten Abstellen der Brennkraftmaschine wird somit die erste der Erfindung zugrunde liegende Aufgabe gelöst, nämlich eine Brennkraftmaschine bereitzustellen, mit der gezielt - nach dem Abstellen der Brennkraftmaschine - eine für den Neustart der Brennkraftmaschine vorteilhafte, vorgebbare Endstellung der Kurbelwelle angefahren werden kann, wobei insbesondere durch Anfahren sogenannter Vorzugspositionen ein kraftstoffsparender Neustart ermöglicht wird.

Weitere vorteilhafte Ausführungsformen der Brennkraftmaschine werden im Zusammenhang mit den Unteransprüchen erörtert.

Vorteilhaft sind Ausführungsformen der Brennkraftmaschine, bei denen mindestens ein zusätzliches Steuerorgan in jedem der n Zylinder vorgesehen ist, mit dem ein Gasaustausch zwischen dem jeweiligen Zylinder und der Umgebung realisierbar ist. Wird in jedem der n Zylinder ein zusätzliches Steuerorgan vorgesehen, erhöht dies die Flexibilität bzw. die Möglichkeiten der Einflußnahme auf das von den Gaskräften auf die Kurbelwelle ausgeübte Drehmoment im Rahmen eines kontrollierten Abstellens der Brennkraftmaschine, denn jeder Zylinder ist anteilig an dem auf die Kurbelwelle übertragenen Drehmoment beteiligt, wobei die momentanen auf die Kolben ausgeübten Gaskräfte der n Zylinder unterschiedlich sein können, da die einzelnen Zylinder in der Regel um einen gewissen Kurbelwinkelbetrag versetzt arbeiten bzw. betrieben werden.

Vorteilhaft sind dabei Ausführungsformen der Brennkraftmaschine, bei denen das mindestens eine zusätzliche Steuerorgan ein Ventil, vorzugsweise ein elektrisch gesteuertes Ventil, ist.

Durch die Öffnungszeit und die Einstellung des Strömungsquerschnittes des zusätzlichen Steuerorgans kann die ausgetauschte Gasmenge bzw. der Druck im Zylinder vergrößert bzw. verringert werden. Mittels eines elektrisch steuerbaren Ventils können sehr kurze Öffnungszeiten realisiert werden, wobei die Ansteuerung grundsätzlich vollkommen flexibel d. h. beliebig erfolgen kann.

Vorteilhaft sind dabei Ausführungsformen der Brennkraftmaschine, bei denen das mindestens eine zusätzliche Steuerorgan zur Betätigung und Steuerung mit einer Motorsteuerung verbunden ist, da die Motorsteuerung unter anderem Kenntnis über weitere für die Steuerung des mindestens einen zusätzlichen Steuerorgans nützliche Betriebsparameter hat.

Um präzise eine bestimmte Vorzugsposition der Kurbelwelle anfahren zu können, ist nämlich eine Vielzahl von Informationen notwendig bzw. hilfreich. Dabei kann auf alle bereits für die übliche Motorsteuerung gemessenen und/oder abgeleiteten Daten zurückgegriffen werden, insbesondere auf die Motordrehzahl, den Kurbelwellenwinkel, die Motortemperatur beziehungsweise eine hiermit korrelierende Temperatur wie die Kühlmitteltemperatur und/oder den Ansaugdruck im Ansaugkrümmer. Die genannten Größen haben erfahrungsgemäß den stärksten Einfluß auf die Auslaufbewegung der Brennkraftmaschine bzw. der Kurbelwelle.

Im Zusammenhang mit dem erfindungsgemäßen Verfahren ist es erforderlich bzw. hilfreich, zu ermitteln, wie viel kinetische Energie nach Abstellen der Brennkraftmaschine im Antriebstrang bzw. in der Kurbelwelle vorliegt.

Ein Modell für die Auslaufbewegung einer Brennkraftmaschine wird beispielsweise in der europäischen Patentanmeldung mit der Anmeldenummer 03101379.0 beschrieben. Dieses Modell berücksichtigt die aktuelle kinetische Energie des Antriebsstranges, die Reibungsverluste und/oder die Kompressions- und Expansionsvorgänge in den Zylindern der Brennkraftmaschine. Ein derartiges Modell kann aufgrund theoretischer Überlegungen gewonnen und in Form mathematischer Gleichungen implementiert werden. Vorzugsweise wird das Modell jedoch ganz oder zumindest teilweise empirisch gewonnen d. h. durch Beobachtung des Motorverhaltens und Aufbereitung der dabei gewonnenen Meßdaten (z. B. als eine Lookup-Tabelle).

Die zweite der Erfindung zugrunde liegende Teilaufgabe, nämlich ein Verfahren zum kontrollierten Abstellen einer Brennkraftmaschine mit n Zylindern, die jeweils über Steuerorgane für einen Ladungswechsel verfügen, aufzuzeigen, wird durch ein Verfahren gelöst, das dadurch gekennzeichnet ist, daß
■ mindestens ein zusätzliches Steuerorgan in mindestens einem der n Zylinder vorgesehen wird, und
■ durch Öffnen und Schließen dieses mindestens einen zusätzlichen Steuerorgans der Druck in dem mindestens einen Zylinder infolge Gasaustausch zwischen Zylinder und Umgebung beeinflußt wird, so daß ein von den in den n Zylindern befindlichen Gasen auf die Kurbelwelle übertragenes Drehmoment beeinflußt wird, wobei dieses Drehmoment in der Art gesteuert wird, daß die nach Abschalten der Zündung und/oder der Kraftstoffzufuhr von der Brennkraftmaschine bis zu ihrem Stillstand abgegebene Energie mittels des steuerbaren Drehmomentes kontrolliert in der Weise verbraucht wird, daß die Kurbelwelle in einer vorbestimmbaren Position angehalten wird.

Das bereits im Zusammenhang mit der erfindungsgemäßen Brennkraftmaschine Gesagte gilt ebenfalls für das erfindungsgemäße Verfahren.

Erfindungsgemäß werden nicht die für den Ladungswechsel vorhandenen Steuerorgane zum kontrollierten Abstellen der Brennkraftmaschine genutzt, wie dies die WO 01/44636 A2 vorschlägt, sondern mindestens ein zusätzlich vorgesehenes Steuerorgan. Das erfindungsgemäße Verfahren kann deshalb auch bei Brennkraftmaschinen zur Anwendung kommen, die nicht über eine zumindest teilweise variable Ventilsteuerung, sondern über eine herkömmliche mechanische Ventilsteuerung mit festen Steuerzeiten verfügen. Durch die Anordnung eines zusätzlichen Steuerorgans wird beim Abstellen der Brennkraftmaschine eine wesentlich höhere Flexibilität erzielt als dies mit einer teilweise variablen Ventilsteuerung möglich ist, wobei nur mit einer vollständig variablen Ventilsteuerung ein ähnlich hoher Grad an Flexibilität beim Abstellen der Brennkraftmaschine realisierbar wäre. Zudem ist die Steuerung des zusätzlichen Steuerorgans weniger komplex und daher weniger aufwendig.

Infolge der auch nach Abstellen der Brennkraftmaschine noch vorhandenen Drehbewegung der Kurbelwelle wird das in den n Zylindern der Brennkraftmaschine befindliche Gas während des Auslaufvorganges durch die in den Zylinderrohren nach wie vor oszillierenden Kolben weiterhin komprimiert, wobei das Gas bei abwärtsgehenden Kolben wieder expandiert.

Die für den Ladungswechsel vorgesehenen Steuerorgane können dabei - entsprechend den unterschiedlichen Bauweisen - entweder deaktiviert werden, was bei elektromagnetisch betätigten Hubventilen leicht realisiert werden kann, oder aber - angetrieben durch die auslaufende Kurbelwelle - unverändert arbeiten d.h. öffnen und schließen, so daß gegebenenfalls weiter Luft angesaugt und ausgeschoben wird. Unter Umständen ist eine im Ansaugtrakt vorgesehene Drosselklappe nach dem Abstellen der Brennkraftmaschine geschlossen worden, was auch einen Einfluß auf den in den Brennräumen vorliegenden Gasdruck nach Abstellen der Brennkraftmaschine hat.

Um den Brennraumdruck in den Zylindern und damit das auf die Kurbelwelle ausgeübte Drehmoment beeinflussen zu können, wird gemäß dem erfindungsgemäßen Verfahren ein zusätzliches Steuerorgan vorgesehen, mit dem auf den Brennraumdruck Einfluß genommen, insbesondere Gas aus den Zylindern entnommen werden kann.

Ein Öffnen des zusätzlichen Steuerorgans führt zu einem Druckabfall im Zylinder, vorausgesetzt im Brennraum herrscht ein Überdruck hinsichtlich der Umgebung des Zylinders. Dadurch wird das auf die Kurbelwelle ausgeübte Drehmoment verringert. Umgekehrt führt ein Öffnen des zusätzlichen Steuerorgans während der Ansaugphase d.h. bei Unterdruck im Brennraum zu einem Einströmen von Gasen in den Zylinder, so daß das Drehmoment zunimmt.

Vorteilhaft sind Ausführungsformen des Verfahrens, bei denen die vorbestimmbare Position eine Vorzugsposition ist und die Kurbelwelle in dieser Vorzugsposition angehalten wird.

Diese Ausführungsform des Verfahrens ist vorteilhaft, weil das Anfahren einer Vorzugsposition günstig für einen Neustart ist.

Ein derartiges Verfahren gestattet beispielsweise bei Brennkraftmaschinen mit Direkteinspritzung ein Starten ohne Starter d.h. direkt aus dem Stillstand zu starten, wofür lediglich Kraftstoff in die Brennräume der stillstehenden Brennkraftmaschine eingespritzt und mittels einer Zündkerze gezündet werden muß.

Vorteilhaft sind Ausführungsformen des Verfahrens, bei denen als zusätzliches Steuerorgan ein Ventil vorgesehen wird. Die Vorteile dieser Ausführungsformen des erfindungsgemäßen Verfahrens zum kontrollierten Abstellen einer Brennkraftmaschine wurden bereits im Rahmen der Erläuterung der Brennkraftmaschine erörtert, weshalb an dieser Stelle auf die entsprechenden Ausführungen Bezug genommen wird.

Vorteilhaft sind Ausführungsformen des Verfahrens, bei denen das mindestens eine zusätzliche Steuerorgan in der Kompressionsphase geöffnet wird, um den in dem Zylinder vorherrschenden Gasdruck zu senken, wodurch das von den Gasen auf die Kurbelwelle übertragene Drehmoment verkleinert wird. Während der Auslaufphase wirkt der sich im Brennraum während der Kompressionsphase aufbauende Druck auf die Drehbewegung der Kurbelwelle verzögernd d. h. wie ein Bremsmoment. Die Kurbelwelle investiert Arbeit zur Verdichtung in die im Zylinder befindlichen Gase und gibt dabei Energie ab.

Ein Öffnen des mindestens einen zusätzlichen Steuerorgans während der Kompressionsphase führt zu einem Druckabfall im entsprechenden Zylinder, wenn im Brennraum Überdruck herrscht. Dadurch wird das auf die Kurbelwelle ausgeübte Drehmoment verringert und der Auslaufvorgang der Kurbelwelle verlängert.

Vorteilhaft sind auch Ausführungsformen des Verfahrens, bei denen das mindestens eine zusätzliche Steuerorgan in der Expansionsphase geöffnet wird, um den in dem Zylindern vorherrschenden Gasdruck zu senken, wodurch das von den Gasen auf die Kurbelwelle übertragene Drehmoment verkleinert wird.

Während der Expansionsphase entspannt sich das unter Druck stehende Gas im größer werdenden Brennraum. Ein Öffnen des mindestens einen zusätzlichen Steuerorgans unterstützt den Abbau des Gasdrucks, wodurch das auf die Kurbelwelle ausgeübte Drehmoment verringert wird, was den Auslaufvorgang der Kurbelwelle verkürzt. Während der Auslaufphase wirkt der sich im Brennraum während der Expansionsphase aufbauende Druck auf die Drehbewegung der Kurbelwelle antreibend d.h. wie ein Antriebsmoment. Die expandierenden Gase treiben die Kurbelwelle an und geben dabei Energie an die Kurbelwelle ab d.h. die Kurbelwelle nimmt Energie auf.

Vorteilhaft sind auch Ausführungsformen des Verfahrens, bei denen das mindestens eine zusätzliche Steuerorgan in der Ansaugphase geöffnet wird, um den in dem Zylindern vorherrschenden Gasdruck zu erhöhen, wodurch das von den Gasen auf die Kurbelwelle übertragene Drehmoment vergrößert wird.

Beim Ansaugen wird im Brennraum des Zylinders durch den sich abwärts bewegenden Kolben ein Unterdruck erzeugt, wodurch Frischluft bzw. Frischgemisch aus dem Ansaugtrakt über das Einlaßventil angesaugt wird. Folglich zieht die auf den Kolben wirkende Gaskraft, die sich aus der Druckdifferenz zwischen Brennraum und Kurbelgehäuse ergibt, an dem Kolben in Richtung des oberen Totpunktes d. h. die resultierende Gaskraft wirkt der Abwärtsbewegung des Kolbens im Rahmen des Ansaugtaktes entgegen, was eine Verzögerung der Abwärtsbewegung und damit der Kurbelwellendrehung bewirkt.

Ein Öffnen des mindestens einen zusätzlichen Steuerorgans während der Ansaugphase führt zu einem Druckausgleich und daher zu einem erhöhten Druck im Brennraum durch Einströmen zusätzlicher Gase in den Zylinder, so daß das verzögernde Drehmoment betragsmäßig vermindert wird.

Vorteilhaft sind auch Ausführungsformen des Verfahrens, bei denen das mindestens eine zusätzliche Steuerorgan - wenn der Druck der in dem mindestens einen Zylinder befindlichen Gase geringer ist als der Druck im Kurbelgehäuse - in der Kompressionsphase und/oder Expansionsphase geöffnet wird, um den in dem mindestens einen Zylinder vorherrschenden Gasdruck zu erhöhen, wodurch das von den Gasen auf die Kurbelwelle übertragene verzögernde Drehmoment betragsmäßig verkleinert wird.

Während der Auslaufbewegung der Brennkraftmaschine wirkt das durch die Gaskräfte ausgeübte Drehmoment sowohl in der Kompressionsphase als auch in der Expansionsphase verzögernd, wenn der Zylinderdruck den Kurbelgehäusedruck unterschreitet, wie dies weiter oben bereits im Zusammenhang mit der Beschreibung der Ansaugphase ausgeführt wurde.

Das auf die Kurbelwelle ausgeübte Drehmoment kann dabei als Bremsmoment betrachtet werden. Dieses Brems-Drehmoment wird nun sowohl in der Kompressionsphase als auch in der Expansionsphase gezielt verringert, um den Auslaufvorgang der Kurbelwelle zu verlängern und die Kurbelwellenstellung zu beeinflussen.

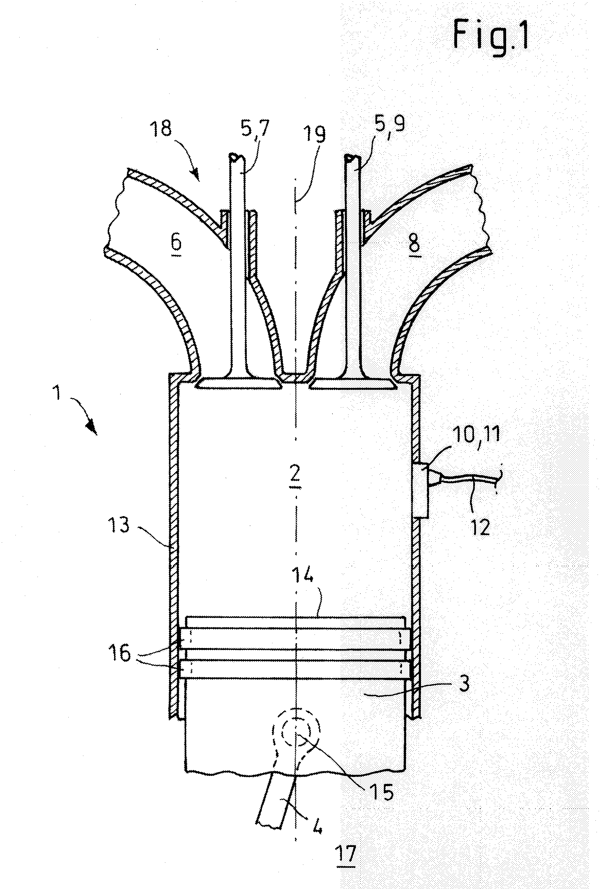

Im folgenden wird die Erfindung anhand eines Ausführungsbeispieles gemäß der Figur 1 näher beschrieben. Hierbei zeigt:
- Fig. 1: schematisch einen Zylinder einer ersten Ausführungsform einer Brennkraftmaschine.

Figur 1 zeigt schematisch einen Zylinder 1 einer ersten Ausführungsform einer Brennkraftmaschine. Das Verfahren zum kontrollierten Abstellen der Brennkraftmaschine wird ebenfalls im Zusammenhang mit der Erläuterung der Figur 1 näher beschrieben.

Der Kolben 3 bildet mit seinem Kolbenboden 14 einen Teil der Brennrauminnenwand und wird axial in einem Zylinderrohr 13 geführt, wobei das Zylinderrohr 13 den Brennraum 2 des Zylinders 1 seitlich begrenzt. Dabei dichtet der Kolben 3 zusammen mit den Kolbenringen 16 den Brennraum 2 gegen das Kurbelgehäuse 17 ab, so daß keine Verbrennungsgase in das Kurbelgehäuse 17 gelangen und kein Öl in den Brennraum 2 gelangt.

Oben wird der Brennraum 2 durch den Zylinderkopf 18 und die in dem Zylinderkopf 18 angeordneten Steuerorgane 5,7,9, die üblicherweise als Hubventile 7,9 ausgebildet sind, begrenzt.

Der Kolben 3 dient der Übertragung der durch die Verbrennung generierten Gaskräfte auf die Kurbelwelle. Hierzu ist der Kolben 3 mittels eines Kolbenbolzens 15 mit einer Pleuelstange 4 gelenkig verbunden. Die Gaskräfte, mit denen der Kolben 3 beaufschlagt wird, werden auf diese Weise über den Kolbenbolzen 15 auf die Pleuelstange 4 und von dieser auf die Kurbelwelle übertragen.

Durch die beschriebene Anordnung von Kolben 3, Kolbenbolzen 15 und Pleuelstange 4 wird gleichzeitig die ausschließlich oszillierende Bewegung des Kolbens 3 in eine rotatorische Bewegung der Kurbelwelle transformiert.

Dabei drücken die Gaskräfte den Kolben 3 während der Expansionsphase in Richtung Zylinderrohrlängsachse 19 nach unten, wobei ausgehend vom oberen Totpunkt (OT) dem Kolben 3 durch die Gaskräfte eine beschleunigte Bewegung aufgezwungen wird. Der Kolben 3, der mit seiner nach unten gerichteten Bewegung versucht, den Gaskräften auszuweichen, muß bei dieser abwärts gerichteten Bewegung die mit ihm gelenkig verbundene Pleuelstange 4 mitnehmen und versetzt dabei die Kurbelwelle in Drehung.

Der Kolben 3 durchläuft den unteren Totpunkt (UT) und schiebt bei seiner Aufwärtsbewegung die Verbrennungsgase bei geöffnetem Auslaßventil 9 in das Abgasrohr 8. Die folgende Abwärtsbewegung dient dem Ansaugen von Frischluft bzw. Frischgemisch bei geöffnetem Einlaßventil 7 über das Saugrohr 6.

Anschließend erfolgt die Kompression der im Brennraum 2 befindlichen Gase und ihre Verbrennung.

Erfindungsgemäß wird das von den Gaskräften über den Kolben 3 und die Pleuelstange 4 auf die Kurbelwelle ausgeübte Drehmoment genutzt, um nach Abschalten der Brennkraftmaschine eine vorbestimmbare Position der Kurbelwelle anzufahren.

Zur Beeinflussung des auf die Kurbelwelle übertragenen Drehmomentes wird ein zusätzliches Steuerorgan 10 vorgesehen. Bei der in Figur 1 dargestellten Ausführungsform wird als zusätzliches Steuerorgan 10 ein elektronisch steuerbares Ventil 11 verwendet, das zur Betätigung mittels einer Verbindungsleitung 12 mit einer Motorsteuerung (nicht dargestellt) verbunden ist. Das Ventil 11 ist in der Nähe des oberen Totpunktes (OT) angeordnet, um auch bei einem nahe des oberen Totpunktes (OT) befindlichen Kolben 3 Gas aus dem Brennraum 2 entnehmen zu können oder einströmen zu lassen.

Das Öffnen des zusätzlichen Steuerorgans 10 führt zu einem Gasaustausch in der Art, daß entsprechend dem momentan vorliegenden Druckgefälle Gas aus dem Zylinder 1 austreten bzw. in den Zylinder 1 einströmen kann. Dadurch wird Einfluß genommen auf das im Zylinder 1 bzw. Brennraum 2 vorliegende Druckniveau.

Folglich kann das von den Gaskräften auf die Kurbelwelle ausgeübte Drehmoment in der Art beeinflußt werden, daß die nach Abschalten der Zündung und/oder der Kraftstoffzufuhr von der Brennkraftmaschine bis zu ihrem Stillstand abgegebene Energie mittels des steuerbaren Drehmoments kontrolliert in der Weise verbraucht wird, daß die Kurbelwelle in einer vorbestimmbaren Position angehalten wird.

### Bezugszeichen

- 1: Zylinder
- 2: Brennraum
- 3: Kolben
- 4: Pleuelstange
- 5: Steuerorgan für Ladungswechsel
- 6: Saugrohr
- 7: Einlaßventil
- 8: Abgasrohr
- 9: Auslaßventil
- 10: zusätzliches Steuerorgan
- 11: Ventil
- 12: Verbindungsleitung
- 13: Zylinderrohr
- 14: Kolbenboden
- 15: Kolbenbolzen
- 16: Kolbenringe
- 17: Kurbelgehäuse
- 18: Zylinderkopf
- 19: Zylinderrohrlängsachse

- n: Anzahl der Zylinder
- OT: oberer Totpunkt
- UT: unterer Totpunkt

## Patentansprüche

1. Brennkraftmaschine umfassend n Zylinder (1), die jeweils über Steuerorgane (5,7,9) für einen Ladungswechsel verfügen,
**dadurch gekennzeichnet, daß**
mindestens ein zusätzliches Steuerorgan (10) in mindestens einem der n Zylinder (1) vorgesehen ist, mit dem ein Gasaustausch zwischen dem mindestens einen Zylinder (1) und seiner Umgebung realisierbar ist.

2. Brennkraftmaschine nach Anspruch 1,
**dadurch gekennzeichnet, daß**
mindestens ein zusätzliches Steuerorgan (10) in jedem der n Zylinder (1) vorgesehen ist, mit dem ein Gasaustausch zwischen dem jeweiligen Zylinder (1) und der Umgebung realisierbar ist.

3. Brennkraftmaschine nach Anspruch 1 oder 2,
**dadurch gekennzeichnet, daß**
das mindestens eine zusätzliche Steuerorgan (10) ein Ventil (11) ist.

4. Brennkraftmaschine nach Anspruch 3,
**dadurch gekennzeichnet, daß**
das Ventil (11) ein elektrisch gesteuertes Ventil ist.

5. Brennkraftmaschine nach Anspruch 3 oder 4,
**dadurch gekennzeichnet, daß**
das mindestens eine zusätzliche Steuerorgan (10) zur Betätigung und Steuerung mit einer Motorsteuerung verbunden ist.

6. Verfahren zum kontrollierten Abstellen einer Brennkraftmaschine mit n Zylindern (1), die jeweils über Steuerorgane (5,7,9) für einen Ladungswechsel verfügen,
**dadurch gekennzeichnet, daß**
■ mindestens ein zusätzliches Steuerorgan (10) in mindestens einem der n Zylinder (1) vorgesehen wird, und
■ durch Öffnen und Schließen dieses mindestens einen zusätzlichen Steuerorgans (10) der Druck in dem mindestens einen Zylinder (1) infolge eines Gasaustausches zwischen Zylinder (1) und Umgebung beeinflußt wird, so daß ein von den in den n Zylindern (1) befindlichen Gasen auf die Kurbelwelle übertragenes Drehmoment beeinflußt wird, wobei dieses Drehmoment in der Art gesteuert wird, daß die nach Abschalten der Zündung und/oder der Kraftstoffzufuhr von der Brennkraftmaschine bis zu ihrem Stillstand abgegebene Energie mittels des steuerbaren Drehmomentes kontrolliert in der Weise verbraucht wird, daß die Kurbelwelle in einer vorbestimmbaren Position angehalten wird.

7. Verfahren zum kontrollierten Abstellen einer Brennkraftmaschine nach Anspruch 6,
**dadurch gekennzeichnet, daß**
■ die vorbestimmbare Position eine Vorzugsposition ist und die Kurbelwelle in dieser Vorzugsposition angehalten wird.

8. Verfahren zum kontrollierten Abstellen einer Brennkraftmaschine nach Anspruch 6 oder 7,
**dadurch gekennzeichnet, daß**
als zusätzliches Steuerorgan (10) ein Ventil (11) vorgesehen wird.

9. Verfahren zum kontrollierten Abstellen einer Brennkraftmaschine nach einem der Ansprüche 6 bis 8,
**dadurch gekennzeichnet, daß**
das mindestens eine zusätzliche Steuerorgan (10) in der Kompressionsphase geöffnet wird, um den in dem jeweiligen Zylinder (1) vorherrschenden Gasdruck zu senken, wodurch das von den Gasen auf die Kurbelwelle übertragene Drehmoment verkleinert wird.

10. Verfahren zum kontrollierten Abstellen einer Brennkraftmaschine nach einem der Ansprüche 6 bis 9,
**dadurch gekennzeichnet, daß**
das mindestens eine zusätzliche Steuerorgan (10) in der Expansionsphase geöffnet wird, um den in den jeweiligen Zylindern (1) vorherrschenden Gasdruck zu senken, wodurch das von den Gasen auf die Kurbelwelle übertragene Drehmoment verkleinert wird.

11. Verfahren zum kontrollierten Abstellen einer Brennkraftmaschine nach einem der Ansprüche 6 bis 10,
**dadurch gekennzeichnet, daß**
das mindestens eine zusätzliche Steuerorgan (10) in der Ansaugphase geöffnet wird, um den in dem jeweiligen Zylindern (1) vorherrschenden Gasdruck zu erhöhen, wodurch das von den Gasen auf die Kurbelwelle übertragene verzögernde Drehmoment betragsmäßig verringert wird.

12. Verfahren zum kontrollierten Abstellen einer Brennkraftmaschine nach einem der Ansprüche 6 bis 11,
**dadurch gekennzeichnet, daß**
das mindestens eine zusätzliche Steuerorgan - wenn der Druck der in dem mindestens einen Zylinder befindlichen Gase geringer ist als der Druck im Kurbelgehäuse - in der Kompressionsphase und/oder Expansionsphase geöffnet wird, um den in dem mindestens einen Zylinder vorherrschenden Gasdruck zu erhöhen, wodurch das von den Gasen auf die Kurbelwelle übertragene Drehmoment betragsmäßig verkleinert wird.
